(19) **Europäisches Patentamt**
**European Patent Office**
**Office européen des brevets**

(11) **EP 1 527 325 B1**

(12) **EUROPÄISCHE PATENTSCHRIFT**

(45) Veröffentlichungstag und Bekanntmachung des Hinweises auf die Patenterteilung:
**03.06.2009 Patentblatt 2009/23**

(51) Int Cl.:
***G01D 5/48*** (2006.01)

(21) Anmeldenummer: **03766291.3**

(86) Internationale Anmeldenummer:
**PCT/EP2003/008195**

(22) Anmeldetag: **25.07.2003**

(87) Internationale Veröffentlichungsnummer:
**WO 2004/013577 (12.02.2004 Gazette 2004/07)**

(54) **SENSOR NACH DEM LAUFZEITPRINZIP MIT EINER DETEKTOREINHEIT FUER MECHANISCHE WELLEN**

SENSOR THAT OPERATES ACCORDING TO A RUNNING TIME PRINCIPLE COMPRISING A DETECTOR UNIT FOR MECHANICALLY ELASTIC SHAFTS

DETECTEUR FONCTIONNANT SELON LE PRINCIPE DE LA DUREE DE PARCOURS, MUNI D'UNE UNITE DE DETECTION POUR ARBRES MECANIQUES-ELASTIQUES

(84) Benannte Vertragsstaaten:
**DE FR GB IT**

(30) Priorität: **31.07.2002 DE 10234960**

(43) Veröffentlichungstag der Anmeldung:
**04.05.2005 Patentblatt 2005/18**

(73) Patentinhaber: **ASM Automation Sensorik Messtechnik GmbH**
**85452 Moosinning (DE)**

(72) Erfinder:
• **STEINICH, Klaus-Manfred**
**85604 Poering-Zorneding (DE)**
• **JIGOU, Liu**
**85435 Erding (DE)**

(74) Vertreter: **Alber, Norbert et al**
**Patentanwalt**
**Albert-Rosshaupter-Strasse 65**
**81369 München (DE)**

(56) Entgegenhaltungen:
**WO-A-96/35923**    **DE-A- 2 833 369**
**US-A- 2 511 178**

## Beschreibung

### I. Anwendungsgebiet

Die Erfindung betrifft Positionssensoren, insbesondere deren Detektoreinheit, basierend auf dem Prinzip der Laufzeitmessung von mechanisch-elastischen Impulsen in einem Wellenleiter, die außer diesem Wellenleiter ein relativ hierzu bewegliches, die mechanisch-elastische Welle erzeugendes oder detektierendes, Positionselement umfassen.

### II. Technischer Hintergrund

Der Wellenleiter besteht in der Regel aus einem Rohr, einem Draht oder einem Band, und kann auch als elektrischer Leiter dienen. Der Wellenleiter kann weiterhin in einem formgebenden, linearen oder kreisförmigen, Körper aus nicht-magnetischem Material, z. B. Kunststoff oder Metall zur Aufnahme und Lagerung des Wellenleiters angeordnet sein.

Basierend auf dem Wiedemann-Effekt erzeugt ein in den Wellenleiter eingespeister Strom-Impuls bei seiner Überlagerung mit einem lateral auf den magnetostriktiven Wellenleiter gerichteten externen Magnetfeld, welches vom Positionselement, insbesondere einem Positionsmagneten herrührt, einen Torsionsimpuls einer mechanisch-elastischen Welle, der sich mit etwa - je nach E-Modul oder Scher-Modulen des verwendeten Wellenleitermateriales - 2.500 m/s - 6.000 m/s vom Ort der Entstehung, also z.B. der Position des Positionselementes, in beide Richtungen im Wellenleiter ausbreitet.

An einer Stelle, üblicherweise an einem Ende des Wellenleiters, wird insbesondere der Torsionsanteil dieses mechanisch-elastischen Impulses von einer Detektoreinheit, die sich meist in fester Position bezüglich des Wellenleiters befindet, erfaßt. Die Zeitdauer zwischen der Auslösung des Erregerstromimpulses und dem Empfang dieser mechanisch-elastischen Welle ist dabei ein Maß für den Abstand des verschiebbaren Positionselementes, z. B. des Positionsmagneten von der Detektoreinrichtung oder auch der Spule bzw. des Elektromagneten.

Ein typischer solcher Sensor ist im US-Patent 5590091 sowie 5736855 beschrieben.

Das Hauptaugenmerk der vorliegenden Erfindung liegt auf der Detektoreinrichtung. Diese umfaßt eine Detektor-Spule, die entweder um den Wellenleiter herum angeordnet ist oder als sogenannter Villary-Detektor um ein Villary-Bändchen herum angeordnet ist, welches quer, insbesondere im 90°-Winkel, vom Wellenleiter abstrebt und mit diesem so verbunden, insbesondere mechanisch fixiert, z. B. verschweißt ist, daß der in dem Wellenleiter laufende Torsionsimpuls im Villary-Bändchen in eine longitudinale Welle transformiert wird. Eine solche longitudinale Welle staucht bzw. dehnt das magnetoelastische Element, also den Wellenleiter oder das Villary-Bändchen, elastisch im kristallinen Bereich, und verändert daher dessen Permeabilität $\mu$. Das Villary-Bändchen bzw. der Wellenleiter besteht zu diesem Zweck aus Material mit möglichst hoher Änderung der magnetischen Permeabilität $\Delta\mu_r$, z. B. aus Nickel oder einer Nickel-Legierung, oder aus anderen geeigneten Materialien. Als Kompromiss zwischen den gesuchten Eigenschaften haben sich dabei auch sogenannte Konstantmodul-Legierungen erwiesen, bei denen der Temperaturkoeffizient des E- und/oder Scher-Modules über weite Temperaturbereiche beeinflussbar und insbesondere konstant gehalten werden kann. Dabei wird etwa die Form eines eigenstabilen Bandmaterials von etwa 0,05 - 0,2 mm Dicke und 0,5 -1,5 mm Breite gewählt.

Wegen

$$\Delta U \approx N \times \frac{\Delta\Phi}{\Delta t} \quad \rightarrow \quad \Delta U \approx N \times \frac{\Delta B \times \Delta A}{\Delta t} = N \times \frac{\mu_0 \times \Delta\mu_r}{\Delta t} \times \frac{I \times N}{L}$$

ist

$$\Delta U \approx \frac{\Delta\mu_r}{\Delta t} \times K$$

da die Werte für $\mu_o$, I, N, L als Konstante angenommen werden können.

Die ein magnetoelastisches Element, z.B. das Villary-Bändchen, durchlaufende mechanisch-elastische Dichtewelle äußert sich somit in einer Spannungsänderung $\Delta U$, die als Nutzsignal an der Detektorspule abgegriffen werden kann.

Wie ersichtlich, ist das Nutzsignal ΔU umso größer, je größer die Änderung der magnetischen Permeabilität $\Delta\mu_r$ ausfällt.

Zusätzlich ist als Arbeitspunkt bzw. Arbeitsbereich ein solcher Bereich der Kurve $\Delta\mu_r$H), also der magnetischen Permeabilität aufgetragen über der magnetischen Feldstärke, erwünscht, in dem sich die magnetischen Permeabilität $\Delta\mu_r$ möglichst linear, relativ zur Ursache aber möglichst stark verändert, weshalb versucht wird, die Funktion $\Delta\mu_r$H) in der Anstiegsflanke möglichst steil auszubilden und den Arbeitsbereich dort, im annähernd linearen Bereich, zu etablieren.

Im Stand der Technik wird zum Einstellen des Arbeitspunktes ein sogenannter Bias-Magnet in Form eines Dauermagneten in räumlicher Nähe zur Detektorspule, z.B. parallel zum Villary-Bändchen, angeordnet.

Der Arbeitspunkt der mechano-elastischen Detektoreinheit hängt neben den magnetischen Parametern des Bias-Magneten hauptsächlich von dessen Positionierung relativ zur Detektor-Spule ab.

Dies ist in mehrfacher Hinsicht nachteilig, beispielsweise beim Einsatz des Positions-Sensors an Stellen, die mechanische, insbesondere dynamischen mechanischen, Belastungen unterworfen sind oder auch thermischen Belastungen, welche die magnetischen Parameter des Bias-Magneten verändern und insbesondere dessen Alterungsprozess, die ebenfalls eine Änderung der magnetischen Parameter zur Folge haben, beschleunigen.

Zusätzlich sind alle bei der Herstellung des Bias-Magneten auftretenden Formabweichungen von der Sollform in gleicher Weise nachteilig. Gleiches gilt für die herstellungsbedingten Streuungen der magnetischen Parameter bei der Herstellung des Bias-Magneten.

Ein weiterer Nachteil bestand darin, dass bei zu starker Annäherung des Positionsmagneten an die Detektorspule der Arbeitspunkt negativ verändert wird Bei der Detektoreinrichtung gemäß dem Stand der Technik musste daher der Wellenleiter über den Messbereich, innerhalb dessen sich der Positionsmagnet hin und her bewegen konnte, hinaus so weit verlängert werden, dass sich die Detektoreinheit mit der Detektorspule ausreichend weit vom Messbereich entfernt befand, um Störbeeinflussungen auf ein beherrschbares Maß zu reduzieren. Dadurch ergab sich jedoch immer eine Gesamtlänge des Positionssensors, die deutlich größer war als sein Messbereich.

Im folgenden wird die Ausbildung der Detektoreinheit als Villary-Detektor und als koaxiale Detektoreinheitbeschrieben, ohne die Erfindung hierauf zu beschränken, da diese auch bei einer koaxial um den Wellenleiter angeordneten Detektor-Spule anwendbar ist. Die Lösung als Villary-Detektor hat den Vorteil einer besonders starken Unterdrückung extern eingekoppelter, mechanisch-akustischer Störsignale gegenüber dem Positionsnutzsignal.

Gattungsgemäße Positionssensoren sind in unterschiedlichsten Bauformen verfügbar.

Die ältesten stammen aus den 40ger Jahren wie die US 2,511,178, bei dem ein längsverlaufender Stab tordiert wird und die Torsion mittels eines magnetostriktiven Elementes gemessen wird.

Die DE 28 33 369 stellt ein Beispiel aus den 70ger Jahren dar, bei der mittels einer um den Wellenleiter herum angeordneten Detektorspule die Position der Signal gebenden Sendeeinheit 3a detektiert werden kann.

WO 69/35923 stellt den aktuellen und nächstrechenden Stand der Technik dar, wobei die Detektorspule jedoch nicht direkt um den Wellenleiter herum angeordnet ist, sondern um ein Adapter-Bändchen herum, welches mit einem Ende auf dem Wellenleiter befestigt ist.

### III. Darstellung der Erfindung

#### a) Technische Aufgabe

Es ist daher die Aufgabe gemäß der vorliegenden Erfindung, eine Detektoreinheit, insbesondere einen Villary-Detektor bzw. eine Detektor-Spule um den Wellenleiter, zur Verfügung zu stellen sowie ein Verfahren zu seinem Betrieb und zu seiner Herstellung, welches die Nachteile des Standes der Technik vermeidet und insbesondere eine Anpassung der Detektoreinheit an sich ändernde Umgebungseinflüsse oder sich ändernde eigene, insbesondere mechanische, elektrische oder magnetische, messlängenabhängige Parameter der Detektoreinheit ermöglicht.

#### b) Lösung der Aufgabe

Diese Aufgabe wird durch die Merkmale der Ansprüche 1, und 15 gelöst. Durch das Beaufschlagen der Detektor-Spule mit einem Vormagnetisierungsstrom wird ein jederzeit veränderliches Bias-Magnetfeld erzeugt.

Ist die Stromquelle einstellbar, kann das Bias-Magnetfeld hierüber gesteuert werden und externe Einflüsse, Alterungsprozesse etc. kompensiert und die Detektoreinrichtung am gewünschten Arbeitspunkt, vorzugsweise im Bereich in einer linearen Abhängigkeit zwischen magnetischer Permeabilität und mechanischer Zug/Druckspannung, betrieben werden.

Wenn zusätzlich oder statt dessen an der Detektor-Spule ein oder mehrere Flussleitstücke angeordnet sind, so bewirkt dies einerseits einen geschlossenen magnetischen Kreis durch die Spule und andererseits eine Abschirmung gegen störende externe Magnetfelder, wie sie beispielsweise vom Positionsmagneten oder auch dem Magnetfeld um den Wellenleiter selbst herrühren können, und es wird die Einkopplung von Störimpulsen erheblich verringert. Solche Beeinflussungen treten ohne Abschirmung durch einen Flussleitkörper vor allem dann auf, wenn sich der Positionsmagnet der Detektoreinrichtung nähert, so dass aus diesem Grund bei herkömmlichen Positions-Sensoren ein relativ grosser Totbereich berücksichtigt werden muss, also ein Längenbereich in der Nähe der Detektoreinheit, in welchem der Positionsmagnet nicht einfahren darf. Dies bedingt eine größere Baulänge des Positions-Sensors gegenüber der gewünschten Meßlänge und ist deshalb bei vielen Anwendungsfällen nachteilig.

Das Flussleitstück hat auch die Funktion der Reduzierung des Steuerstromes (Vormagnetisierungsstromes) auf ein Minimum sowie der Erhöhung der Signalamplitude.

Die magnetische Abschirmung in Form des Flussleitkörpers sollte dabei aus einem Material mit möglichst hoher magnetischer Permeabilität ($\mu_r \gg 1$), insbesondere von mindestens $\mu_r > 1000$, bestehen, um wenig Steuerstrom zu benötigen. Alternativ kann der Flussleitkörper auch magnetisch hart sein, damit auch ohne Stromfluß durch die Detektor-Spule durch Remanenz ein magnetisches Restfeld verbleibt und der Flussleitkörper wenigstens für begrenzte Zeit als Bias-Magnet (temporäre Dauermagnet) wirkt.

Vor allem in Fällen, in denen der bzw. die Flußleitkörper die Detektorspule nicht vollständig umschließt und/ oder wenn keine Flußleitstücke verwendet werden, aber auch als Zusatzmaßnahme, kann die magnetische Abschirmung verbessert werden durch ein Abschirmgehäuse, welches die Detektorspule einschließlich des sie durchdringenden Teiles des magneto-elastischen Elementes (Wellenleiter oder Villary-Bändchen) möglich dicht umschließt. Als Material für das Abschirmgehäuse kommt sogenanntes Mu-Metall in Frage, welches eine Permeabilität von $\mu_r \geq 1000$ besitzt, in Frage.

Sofern es sich bei der Detektoreinheit um die Bauform eines Villary-Detektors, also mit einem quer vom Wellenleiter abstrebenden Villary-Bändchen, handelt, welches sich in die Detektor-Spule hinein, vorzugsweise aus dieser auch wieder heraus erstreckt, so muss der Flussleitkörper notwendigerweise wenigstens eine Eintrittsöffnung, gegebenenfalls auch eine Austrittsöffnung, für das Villary-Bändchen umfassen gegenüber der sich das Villary-Bändchen ohne mechanischen Kontakt bewegen können muss. Darüber hinaus ist wenigstens eine Leiteröffnung in dem Flussleitkörper notwendig, um die die Detektor-Spule versorgenden elektrischen Leiter durch den Flussleitkörper hineinführen zu können. Vorzugsweise geschieht dies nicht durch die Öffnungen für das Villary-Bändchen hindurch, sondern durch eine separate Leiteröffnung, die sich zwar auch in der Stirnseite der meist zylindrische Flussleitkörper befindet, vorzugsweise jedoch in deren Mantelfläche.

Um eine einfache Montage des Flussleitkörpers zu ermöglichen, besteht der Flussleitkörper entweder aus zwei halbzylindrischen, einander zu einem Zylinder ergänzenden, Schalen, in denen die beschriebenen Öffnungen auf der Berührungsebene der Halbschalen liegen, oder aus einem topfförmigen, auf einer Stirnseite offenen Zylinder, und einem die Stirnseite verschließenden Deckel.

Ferner ist darauf zu achten, dass sich der Wellenleiter und gegebenenfalls der ihn umgebende und abstützende Stützkörper in einer definierten Position zur Detektor-Spule befindet, und diese Relativposition ausreichend stark, unbeweglich, fixiert ist.

Die Detektoreinheit umfaßt eine Detektoranordnung, in welche die Detektor-Spule integriert ist, und darüber hinaus auch eine Stromversorgung.

Detektorspule und Entkoppelungsimpedanz können dann entweder in einer Meßbrücke verschaltet werden, oder in einer Reihenschaltung, um dass gewünschte Positions-Nutzsignal zu erhalten, welches anschließend vorzugsweise über einen Differenzverstärker und gegebenenfalls eine weitere Brückenschaltung weiterverarbeitet werden kann. Dabei sind die beiden Spulen vorzugsweise als zwei getrennte Wicklungen z.B. auf einem gemeinsamen Spulenkörper realisiert. Auch das Zusammenfassen zu einer einzigen gemeinsamen Wicklung ist möglich.

Während das Villary-Bändchen in aller Regel aus magnetoelastischem Material besteht, sind auch mehrteilige Ausbildungen möglich aus einem ersten und zweiten Teilbändchen, die miteinander verbunden sind, wobei dann vorzugsweise das erste Teilbändchen aus nicht magnetischen und nicht magnetoelastischem Material besteht, das zweite Teilbändchen dagegen aus magnetoelastischem Material.

Um die Beeinflussung der Detektoreinheit durch den Erregerimpuls weitest möglichst zu verringern, wird der Biasstrom der Detektor-Spule erst aufgeschaltet, nachdem der Erregerimpuls durch den Wellenleiter abgeklungen ist. Danach wird der Biasstrom entweder wie vorbeschrieben so gesteuert, dass das Villary-Bändchen im linearen Bereich betrieben werden kann, oder so, dass das erzielbare Positionsnutzsignal, insbesondere hinsichtlich seiner absoluten Amplitude und/oder in Relation zur Stärke des Positionstörsignales optimal wird.

Als besonders wirkungsvoll hat sich die Ausbildung der Detektorspule, vor allem wenn sie von Strom durchflossen wird, zur Einstellung des Arbeitspunktes, in Form einer Toroid-Spule erwiesen, wobei die Zentralöffnung der Toroid-Spule dann von dem magnetoelastischen Element, also Villary-Bändchen oder Wellenleiter, durchdrungen wird, da hierdurch ein besonders gutes Nutzsignal erzielt wird.

Ferner hat sich gezeigt, daß auch die Detektion des Nutzsignales direkt vom Wellenleiter, also nicht über ein quer vom Wellenleiter abstehendes Villary-Bändchen, mittels einer Detektoranordnung möglich ist, insbesondere wenn an einem Ende des Wellenleiters ein Reflektor vorhanden ist, der die entlang des Wellenleiters laufende mechanischelastische Welle reflektiert, und die Detektoranordnung - insbesondere in der Nähe zu diesem Reflektor - an einer solchen Position angeordnet ist, an dem sich die Amplitude der gegen den Reflektor laufenden Welle sowie die Amplitude der von dort reflektierten Welle verstärkend überlagern, wodurch im Optimalfall eine verdoppelte Amplitude erzielt werden kann.

Dadurch wird kein Villarybändchen benötigt, dessen Wärmebehandlung und Verschweißung am Wellenleiter nur schwer reproduzierbar ist.

Der Positionsmagnet soll dabei vorzugsweise ein parallel zum Wellenleiter ausgerichtetes Magnetfeld besitzen.

In diesem Fall ist eine Abtastung des Nutzsignals durch eine Detektoranordnung, die insbesondere eine Detektorspule umfaßt, möglich, ohne daß diese Detektorspule permanent von einem Gleichstrom durchflossen wird und/ oder ohne daß ein zusätzlicher Bias-Magnet nahe an der Detektoranordnung angeordnet werden muß.

Dabei sind mehrere konkrete Bauformen möglich:

Die Detektorspule kann von dem Wellenleiter koaxial in dessen Längsrichtung durchdrungen werden, oder wenigstens eine Detektorspule, ggf. auch zwei diametral einander gegenüberliegende Detektorspulen können beidseits des Wellenleiters in gleicher Position angeordnet sein.

Vorzugsweise ist an der Spule jeweils ein Flußleitkörper angeordnet, wobei der Flußleitkörper nicht näher als ¼ bis 1/8 der Wellenlänge des Wellenleiters an den Wellenleiter heranreichen soll, um das Ergebnis nicht zu verschlechtern.

Bei einer koaxial zum Wellenleiter angeordneten Detektorspule kann der Flußleitkörper die Spule außen umschließen bis auf den Durchlaß für den Wellenleiter, oder auch eine Stirnseite offen lassen, wobei dann eine hülsenförmige Zwischenwand um den Wellenleiter herum zwischen Wellenleiter und dem Innenumfang der Detektorspule zu bevorzugen ist.

Sofern die Detektorspule nicht von dem Wellenleiter durchdrungen wird, sondern neben dem Wellenleiter angeordnet ist, kann die Spule mit ihrer Längsachse parallel zur Längsrichtung des Wellenleiters oder quer hierzu angeordnet sein, entweder mit einer Spule nur auf einer Seite des Wellenleiters oder mit zwei, insbesondere identischen Spulen, einander gegenüberliegend bezüglich des Wellenleiters.

Der Flußleitkörper kann dabei hülsenförmig und mit seiner Längsachse koaxial zur Längsachse der Detektorspule diese außen umgeben oder in dem inneren Durchlaß der Detektorspule angeordnet sein.

Vor allem bei quer zur Längserstreckung des Wellenleiters stehender Spulenachse muß dabei der Flußleitkörper die Spule auf deren radialen Außenseiten nicht vollständig umschließen, sondern ein E-förmiger Flußleitkörper, dessen zentraler Schenkel die Spule durchdringt, ist ebenfalls gut einsetzbar.

**c) Ausführungsbeispiele**

Eine Ausführungsform gemäß der Erfindung ist im folgenden anhand der Figuren beispielhaft näher beschrieben. Es zeigen:

Fig. 1: eine Aufsicht auf den Positions-Sensor,

Fig. 2: eine Seitenansicht mit teilgeschnittener Spule gemäß Fig. 1,

Fig. 3: eine Frontansicht gemäß Fig. 1,

Fig. 4a,b: die Detektor-Spule in einer Reihenschaltung,

Fig. 4c: die Detektor-Spule in einer Messbrücke,

Fig. 4d: einen Differenzverstärker zur Weiterverarbeitung des Positionssignales,

Figuren 5: Schnittdarstellungen durch verschiedene Detektor-Anordnungen,

Fig. 6: Schnittdarstellungen durch eine Detektoranordnung auf dem Wellenkörper,

Fig. 7: Schnittdarstellungen analog zu Linie VII-VII gemäß Fig. 3,

Fig. 8: Detektoranordnung mit Toroid-Spule,

Fig. 9: weitere Detektoranordnungen, und

Fig. 10a, 10b: zusätzliche Detektoranordnungen.

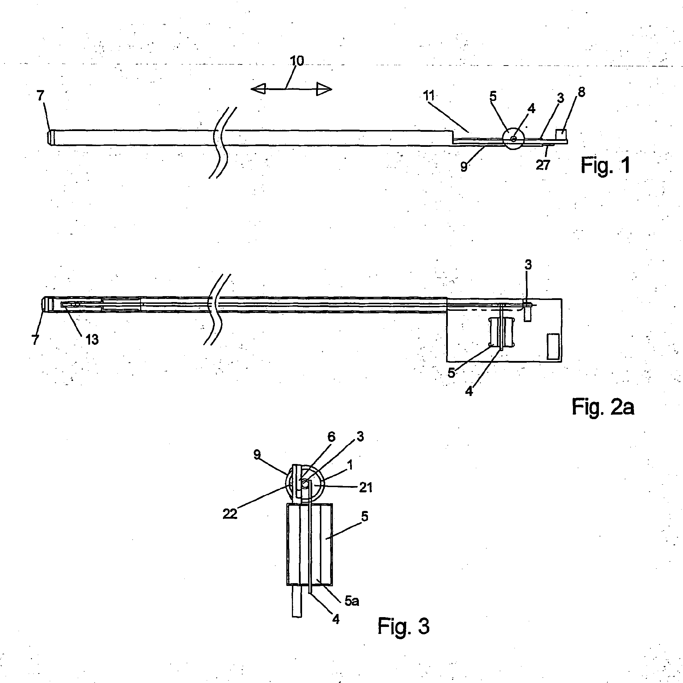

Die Figuren 1 und 2 zeigen ein Sensor-Element, bei dem der Stützkörper 1 ein Rohr mit kreisförmigem Querschnitt ist und ebenso wie der zentral darin verlagfende Wellenleiter 3 stark verkürzt dargestellt ist. In der Praxis sind diese beiden Bauteile sehr lang im Vergleich zum Durchmesser ausgebildet, da sie sich ja über den gesamten Messbereich in Messrichtung 10 erstrecken müssen.

Anstelle eines geradlinig verlaufenden Wellenleiters im Stützkörper kann es sich auch um einen gekrümmten, insbesondere ringförmig und kreisförmig gekrümmten, Stützkörper mit darin liegendem Wellenleiter 3 handeln, wodurch die Messrichtung 10 nicht mehr eine gerade, sondern eine gekrümmte Linie, beispielsweise ein Kreis oder nahezu vollständiger Kreis, sein könnte.

Der Wellenleiter 3 ist zentral im unwesentlich größere inneren Hohlraum des Stützkörpers 1 gehalten durch in Längsrichtung beabstandete Stege oder eine durchgängig vorhandene Abstützung beispielsweise mittels eines oder mehrerer rohrförmiger Stücke mit homogener oder zellförmiger Struktur, z. B. eines Schaumschlauches 21 gegenüber dem Innendurchmesser des Stützkörpers 1. Ein isolierter Rückleiter 22 ist z. B. zwischen dem Außenumfang dieses Schlauches 21 und dem Innenumfang des Rohres angeordnet, welches auch als elektrischer Rückleiter dienen kann.

Am vorderen, in den Figuren 1 und 2 linken, Ende kann der Stützkörper 1 durch einen Verschluss 7 dicht verschlossen sein, und der Wellenleiter 3 kann an seinem freien vorderen Ende ein Dämpfungselement 13 aufweisen, um dort ankommenden mechanischen Schwingungen im Wellenleiter 3 nicht zu reflektieren, sondern möglichst vollständig zu dämpfen.

Für die Erfindung wesentlich ist jedoch das hintere Ende des rohrförmigen Stützkörpers 1 und Wellenleiters 3 mit der Verbindung mit einer dort angeordneten Kopfplatine 2, ohne dass insbesondere die Notwendigkeit besteht, diese Kopfplatine in irgendeiner Form von Halterung oder Gehäuse unterzubringen, indem erst dieses Gehäuse oder die Halterung stabil mit dem Stützkörper 1 verbindbar ist.

Zu diesem Zweck wird am hinteren Ende der Stützkörper 1 über eine Länge, die maximal der Länge der Kopfplatine 2 entspricht, eine Aussparung 11 angefertigt. Dabei wird entweder - wie in Fig. 1, 2 und 3 dargestellt - hinsichtlich des Querschnittes des Stützkörpers 1 eine Parallele zu einer Tangente nach innen versetzt gelegt und der dadurch abgetrennte größere Teil des Querschnittes des Stützkörpers 1 entfernt. Auf den verbleibenden kleineren Teil des Querschnittes, der dann in Form eines Fortsatzes 9 bestehen bleibt, ist die Kopfplatine 2 z. B. aufgeklebt.

Da die Kopfplatine 2 - betrachtet in Messrichtung 10, also der Verlaufsrichtung des Stützkörpers 1 und Wellenleiters 3 - wesentlich breiter als der Querschnitt des Stützkörpers 1 ist, erfolgt diese Anordnung der Kopfplatine 2 so, dass diese nur auf einer Seite über die Breite des Querschnittes des Stützkörpers 1 vorsteht, also insbesondere auf der anderen Seite mit der Außenkante des Stützkörpers, insbesondere mit der Außenkante des Fortsatzes 9, abschließt, wie am besten in der Figur 3 dargestellt.

Der Kleber 14 ist dabei vorzugsweise nicht nur zwischen den Berührungsflächen der Kopfplatine 2 mit dem Fortsatz 9, sondern auch zwischen der Kopfplatine 2 und dem Innenumfangssegment dieses Fortsatzes 9 angeordnet, um eine sichere Verklebung zu gewährleisten, und reicht vorzugsweise auch um die Kanten des Fortsatzes 9 etwas auf die Außenfläche des Fortsatzes 9 herum.

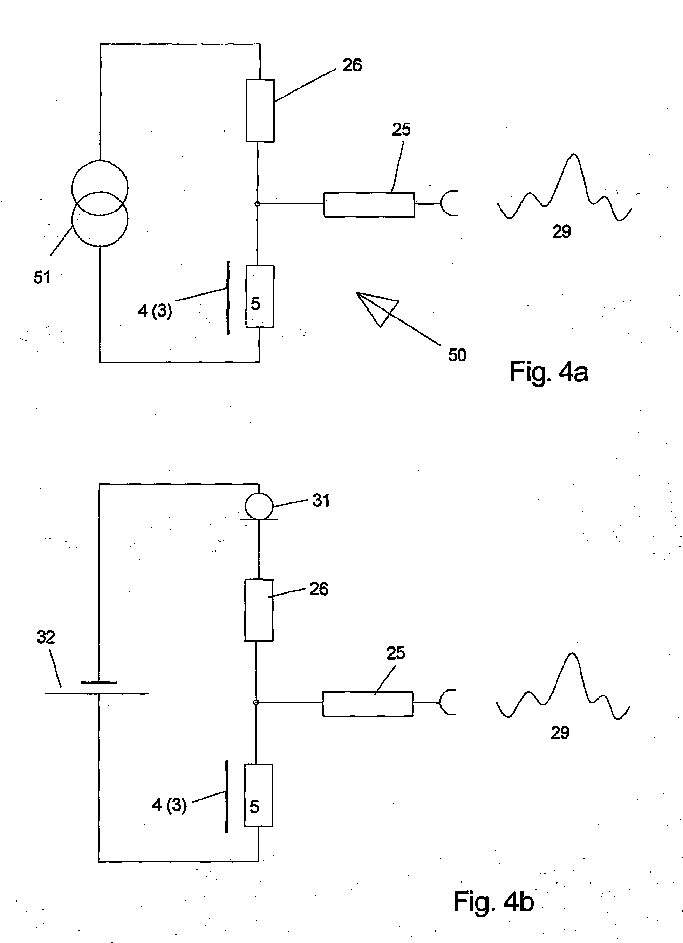

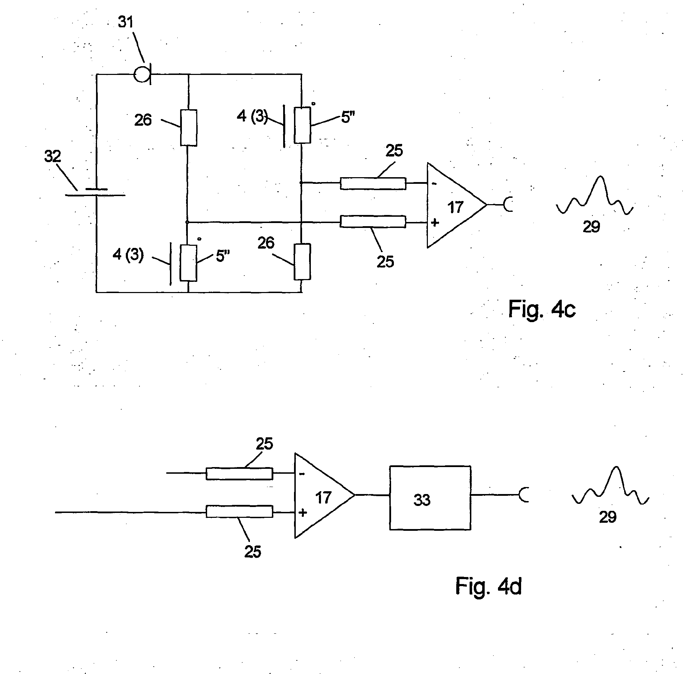

Die Figuren 4 ff. und 5 zeigen Detektorschaltungen im konkreten Aufbau und als Ersatzschaltbild, in welche die Detektoranordnung 105 (einschliesslich der Detektor-Spule 5) des Villary-Detektors eingebunden ist.

Fig. 4a zeigt den Grundaufbau der Detektorschaltung 50, welcher die Detektoranordnung 105 einschliesslich der Detektorspule 5 in Reihe geschaltet mit einer Entkopplungsimpedanz 26 zeigt, die beide gemeinsam von einer Stromquelle 51 versorgt werden. Zwischen Detektorspule 5 und Entkopplungsimpedanz 26 erfolgt der Abgriff des Nutzsignals 29 über eine Koppelimpedanz 25, z.B. einen Kondensator.

Fig. 4b zeigt einen analogen Aufbau, wobei die Stromquelle 51 ersetzt ist durch eine Spannungsquelle 32 und eine in Reihe hierzu liegende Konstantstromdiode 31 im Kreis mit der Detektoranordnung 105 und der Entkopplungsimpedanz 26.

Fig. 4c zeigt eine Schaltung, bei der die Detektorspule der Detektoranordnung auf zwei Detektorspulen 5" verteilt ist, die jeweils die Hälfte an Wicklungen aufweisen und gegensinnig in zwei parallelen Ästen der mit Spannungsquelle 32 und Gleichstromdiode 31 ausgestatteten Stromquelle angeordnet sind. In jedem der beiden parallelen Äste ist zusätzlich zur jeweiligen halben Detektorspule 5" eine Entkopplungsimpedanz 26 im einen Fall sowie eine Brückenergänzungsimpedanz 16 im anderen Fall angeordnet.

In jedem der parallelen Äste erfolgt der Abgriff eines Signals in der Mitte zwischen den beiden Bauelementen und wird über jeweils eine Koppelimpedanz 25 einem Verstärker 17 zugeführt, der das Nutzsignal 29 abgibt.

Fig. 4d zeigt einen Quadrierer 33, der zur Verstärkung des Nutzsignals 29 in allen der vorbeschriebenen Fälle eingesetzt werden kann.

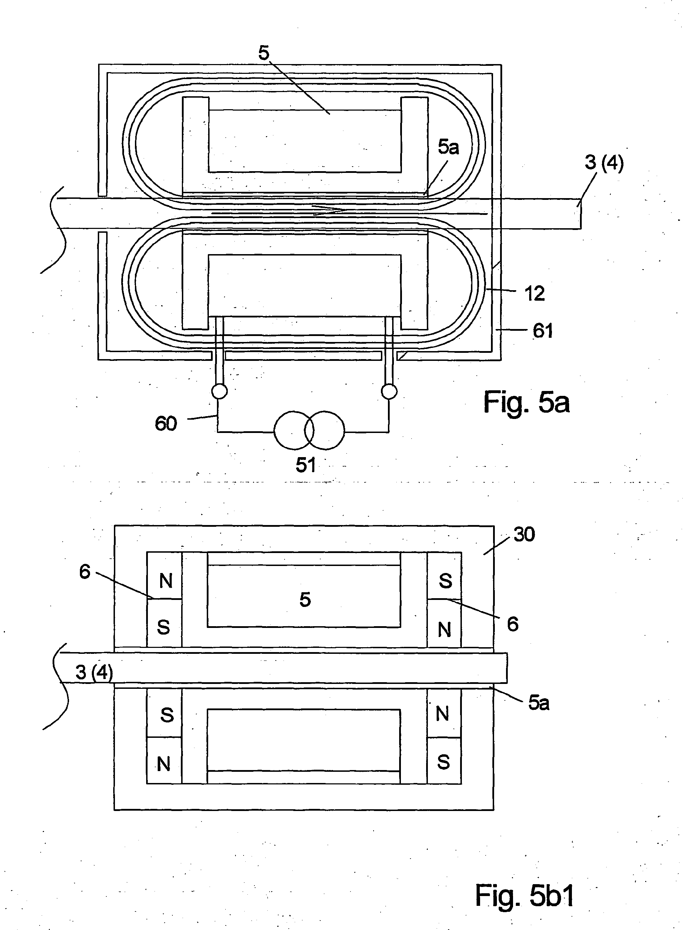

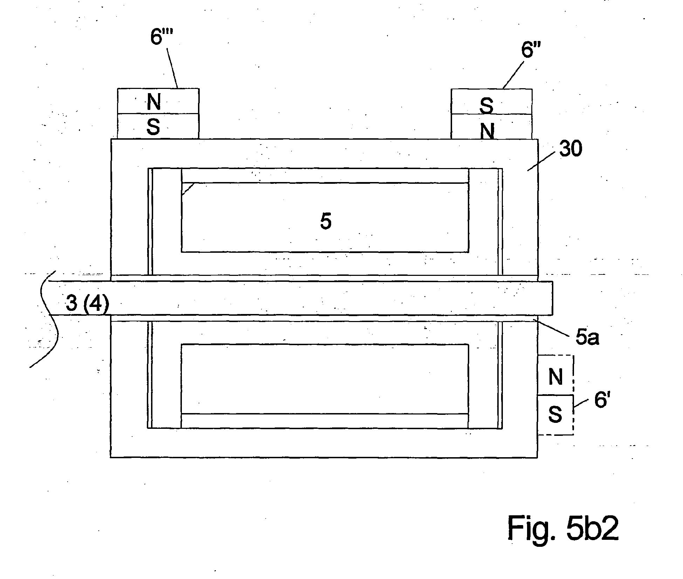

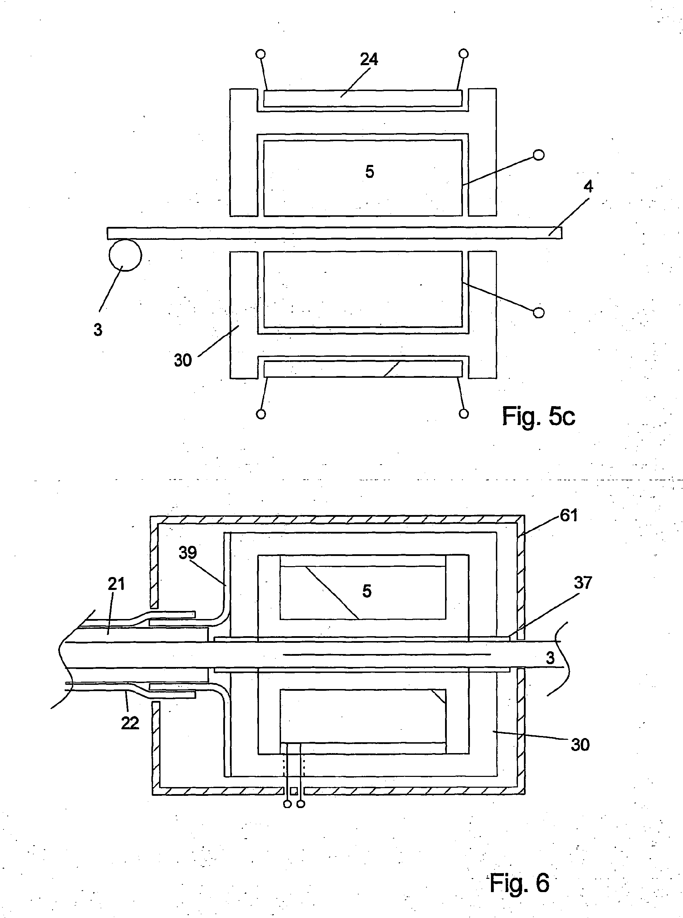

Die Figuren 5 - 7 zeigen dagegen verschiedene konstruktive Ausführungsformen gemäß der Erfindung:

In Fig. 5a ist die das Villary-Bändchen 4 (oder den Wellenleiter 3) umgebende Detektorspule 5 dargestellt, aus deren Durchgangsöffnung 5a das Villary-Bändchen beidseitig vorsteht. Die Verbindung des Villary-Bändchens 4 zum Wellenleiter sowie die weiteren Bestandteile der Detektoranordnung sind nicht dargestellt.

Gegenüber dem Stand der Technik, in dem diese Detektorspule 5 zum Abgreifen eines Nutzsignals benutzt wird, wird vorliegend ein Stromfluss (Biasstrom 60) durch die Spule erzeugt, mittels der Gleichstromquelle 51, um die gewünschte Vormagnetisierung des Villary-Bändchens 4 zu erreichen, wie anhand der eingezeichneten Feldlinien 12 ersichtlich.

Zusätzlich kann zur Abschirmung gegen magnetische und elektrostatische Einflüsse diese Detektorspule 5, vorzugsweise auch die gesamte Detektoranordnung 105, also z. B. einschließlich der Stromquelle 51, von einer Abschirmhülse 61 möglichst dicht umgeben sein, die in diesem Fall nur Öffnungen für den Eintritt des Villary-Bändchens 4 bzw. Wellenleiters 3 einerseits sowie zur Einführung der Stromanschlüsse für die Detektorspule 5 umfaßt. Die Abschirmhülse besteht vorzugsweise aus einem Material hoher Permeabilität, insbesondere einem sogenannten Mu-Metall mit einer Permeabilität $\mu > 1000$.

Fig. 5b zeigen, wie die Detektorspule 5 von einem Flussleitkörper 30 umgeben ist, aus welchem stirnseitig lediglich das die Durchgangsöffnung 5a der Detektorspule 5 durchdringende Element, sei es das Villary-Bändchen 4 oder der Wellenleiter 3, herausragt. Dadurch wird eine magnetische Fremdbeeinflussung der Detektorspule 5 von außen reduziert, aber insbesondere die magnetische Induktion im Inneren der Spule erhöht, sodass erheblich weniger Magnetisierungsstrom benötigt wird..

Zusätzlich kann eine Vormagnetisierung des Villary-Bändchens 4 bzw. Wellenleiters 3 erreicht werden, indem innerhalb und/oder außerhalb des Flussleitkörpers 30 ein oder mehrere Magnete 6, 6', 6", 6''' angeordnet werden.

So zeit Fig. 5b1 beispielsweise mit Polungsrichtung radial zur Längsrichtung der Detektorspule 5 innerhalb der Flußleitstücke 30 stirnseitig angeordnete Stabmagnete 6 (oder ein Ringmagnet), deren Polung einander entsprechender Magnete an den entgegengesetzten Stirnseiten der Spule 5 entgegengesetzt ist, um so einen lateralen Fluss (nierenförmige Feldlinien 12, wie in Fig. 5a eingezeichnet) zu erreichen.

Die Anordnung des bzw. der Magnete 6'-6'''ist auch ausserhalb, z.B. auf der äusseren Stirnfläche des Flussleitkörpers 30, und/oder jeweils stirnseitig auf dem Schlitz für die Leiteranschlüssemöglich, wie Fig. 5b2 zeigt, wobei vorzugsweise zwei Magnete 6", 6''' mit wiederum radialer Polrichtung nahe der längsseitigen Enden außen auf der Mantelfläche der abschirmenden Flußleitstücke 30 angeordnet sind, mit entgegengesetzter Polrichtung, während ein dritter Magnet 6' stirnseitig außen, hinweisend auf die zentrale Öffnung zum Eintreten des Wellenleiters 3 bzw. Villarybändchens 4, ebenfalls radial polarisiert angeordnet ist. Dabei dienen die Magnete 6' und 6" primär der Verstärkung des Positionssignals, während der Magnet 6''' der Verbesserung des Verhältnisses zwischen Nutzsignal und Störsignalen dient. In allen drei Fällen handelt es sich vorzugsweise um Permanentmagnete, ebenso wie bei dem Magneten 6 innerhalb der Flußleitstücke 30.

Dabei wird die Detektorspule 5 vorzugsweise nur zum Abgreifen des Nutzsignals in Form einer Spannungsänderung benutzt, oder zusätzlich auch zum Beaufschlagen mit Biasstrom.

Fig. 5c zeigt eine Lösung, bei der die Detektorspule 5 ebenfalls von einem Flussleitkörper 30 umgeben ist, aus welchem nur das Villary-Bändchen 4 herausgeführt ist, und zusätzlich die Anschlüsse für die Detektorspule 5, die in diesem Fall zusätzlich von einem Strom durchflossen wird, um die gewünschte Vormagnetisierung des Villary-Bändchens 4 zu erzeugen.

Außen auf dem Flussleitkörper 30, das zu diesem Zweck an den Stirnflächen radial nach außen etwas überstehen kann, ist eine zusätzliche Feldspule 24 aufgebracht. Das Nutzsignal kann wahlweise an der Detektorspule 5 oder der Feldspule 24 abgegriffen werden bzw. beide Signale werden einer Auswerteschaltung zugeführt.

Fig. 6 zeigt eine körperliche Lösung bei Aufbringen der Detektorspule 5 auf dem Wellenleiter 3. Auch dabei ist die Spule 5 von einem Flussleitkörper 30 weitestgehend eingefasst, das stirnseitig insbesondere nur von dem Wellenleiter 3 durchdrungen wird, wobei ein zusätzliches buchsenförmiges Lagerelement 37 zwischen dem Wellenleiter 3 und der Durchgangsöffnung in der Abschirmung 30 angeordnet ist. Das Lagerelement 37 soll eine möglichst geringe Dämpfungswirkung gegenüber der mechanisch-elastischen Welle, die entlang des Wellenleiters läuft, aufweisen. Zusätzlich ist der rohrförmige, den Wellenleiter 3 sowie dessen Lagerung, z.B. den Schaumschlauch 21 umgebende, Rückleiter 22 elektrisch leitend mit einer die gesamte benachbarte Stirnfläche des Flussleitkörpers 30 abdeckenden Stirnplatte 39 aus elektrisch leitendem Material verbunden.

Durch den Flussleitkörper 30 sind weiterhin die elektrischen Anschlüsse für die Detektorspule 5 nach außen geführt.

Auch hier kann die Detektoranordnung 105 zusätzlich außen von einer möglichst dicht umschließenden Abschirmhülse 61, analog zur Darstellung und Beschreibung in Fig. 5a, angeordnet sein, bei der in diesem Fall vorzugsweise auch der Übergang zwischen dem Rückleiter 22 und der Stirnplatte 39 noch innerhalb dieser Abschirmhülse 61 liegt.

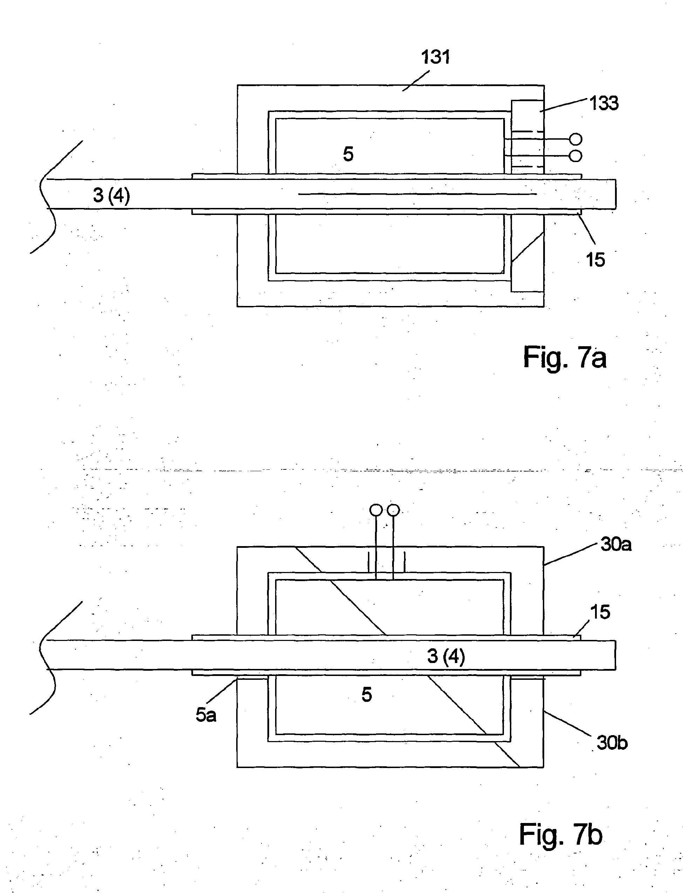

Die Figuren 7 zeigen Längsschnitte durch die von einem Flussleitkörper 30 umgebene Detektoranordnung 105 mit der Detektor-Spule 5.

In beiden Varianten der Figuren 7a, b ist die Detektor-Spule 5 in Längsrichtung von dem Villary-Bändchen durchdrungen und steht an beiden Enden aus der Detektor-Spule 5 vor. Zur Vermeidung eines mechanischen Kontaktes zwischen beiden kann das Villary-Bändchen 4 wenigstens über die gesamte Länge nicht nur der Detektor-Spule 5 sondern auch der Flussleitkörper 30 von einem z. B. schlauchförmigen Lagerelement 15 mit geringer mechanischer Dämpfung umgeben sein.

Der Flussleitkörper 30 weist dagegen in beiden Fällen verschiedene Ausbildungen auf:

In Figur 7a besteht der Flussleitkörper 30 aus einem topfförmigen Basisteil 133 in dem eine Öffnung 5a zum Hindurchführen des Villary-Bändchens 4 mit umgebenden Schlauch 15 zentral stirnseitig angeordnet ist. Die gegenüberliegende offene Stirnseite wird vom einen Deckel 132 verschlossen, der außer einer zentralen Öffnung 5a' zum Heraustreten des Lagerelementes 15 und Villary-Bändchens 4 exzentrisch eine Leiteröffnung 5b' für die beiden elektrischen Leitungen zur Detektor-Spule 5 aufweist.

Unabhängig von der Bauform des Flussleitkörpers 30 kann die Leiteröffnung 5b auch in der Mantelfläche des Flussleitkörpers angeordnet sein.

Dies ist der Fall bei der Bauform gemäß Figur 7b, bei der das zylindrische Gehäuse des Flussleitkörpers 30 aus zwei Halbschalen besteht, deren Kontaktebene die Zeichenebene der Figur 7b ist, und bei denen sämtliche Öffnungen, also die stirnseitigen zentralen Öffnungen 5a,a' ebenso wie die Leiteröffnung 5b,b', auf dieser Berührungsebene liegen und vorzugsweise zur Hälfte in jeder der beiden Halbschalen ausgebildet sind. Um identische Teile verwenden zu können, ist deshalb die Leiteröffnung 5b auf zwei einander gegenüberliegenden Positionen in der Mantelfläche vorhanden.

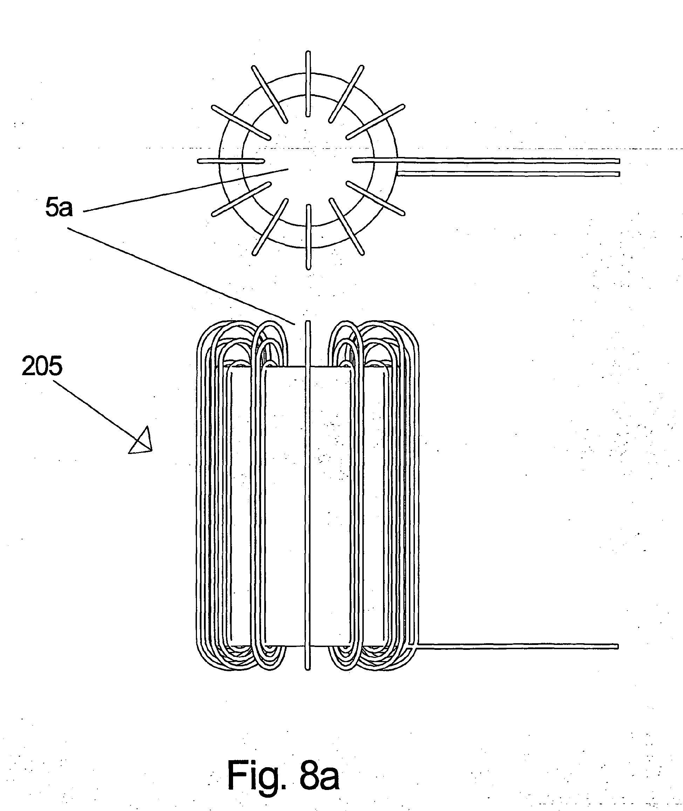

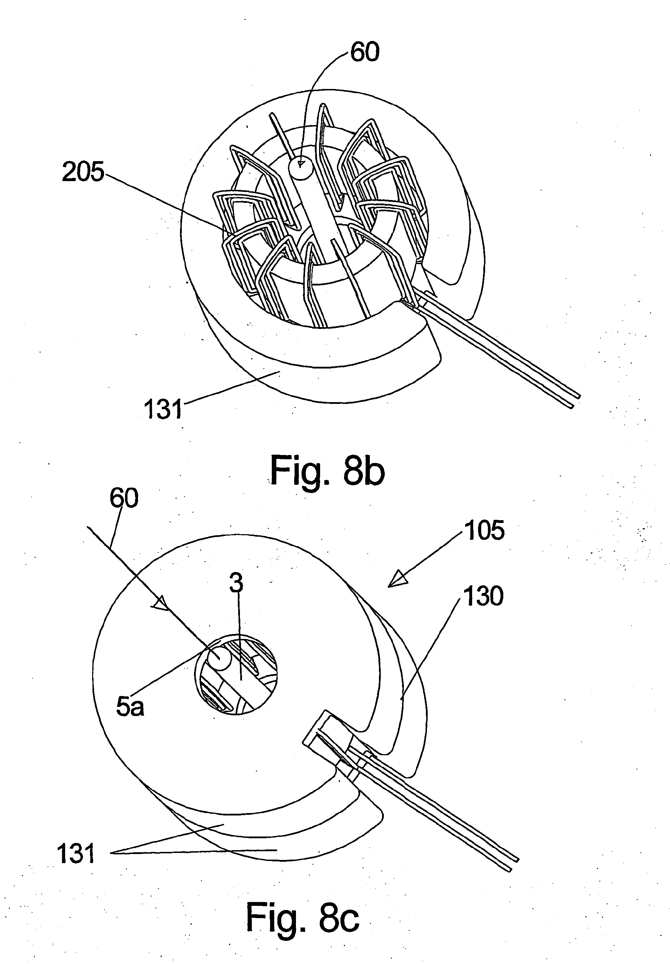

Die Figuren 8 zeigen eine Lösung der Detektoranordnung 105, bei der die Detektorspule die Form einer Toroid-Spule 205 aufweist. In den Figuren 8 sind die übrigen Bauteile des Sensors nicht dargestellt, jedoch soll auch bei diesen Lösungen der Figuren 8 die zentrale Durchgangsöffnung 5a der Detektoranordnung 105 von dem magnetoelastischen Element, also dem Wellenleiter selbst oder dem Villary-Bändchen, zentral durchdrungen werden.

Figur 8a zeigt die Toroid-Spule 205 einzeln, gewickelt auf einem toroidförmigen Wicklungskern.

Die Toroid-Spule 205 ist gemäß Figur 8c von einem Flussleitkörper 130 umgeben, der an seinen Stirnseiten ebenfalls eine Durchgangsöffnung 5a aufweist, ansonsten die Toroid-Spule 205 umschließt und lediglich geringe Auslässe für die elektrischen Anschlüsse der Spule frei lässt. Der Flussleiter 130 besteht aus zwei vorzugsweise identischen Halbschalen 131, die mit ihren offenen Seiten gegeneinander gesetzt werden und in ihrem Inneren die Toroid-Spule 205 aufnehmen, weshalb die Halbschalen 131 vorzugsweise ebenfalls einen runden Querschnitt besitzen, und auf einer Stirnseite geschlossen sind bis auf die Durchgangsöffnung 105.

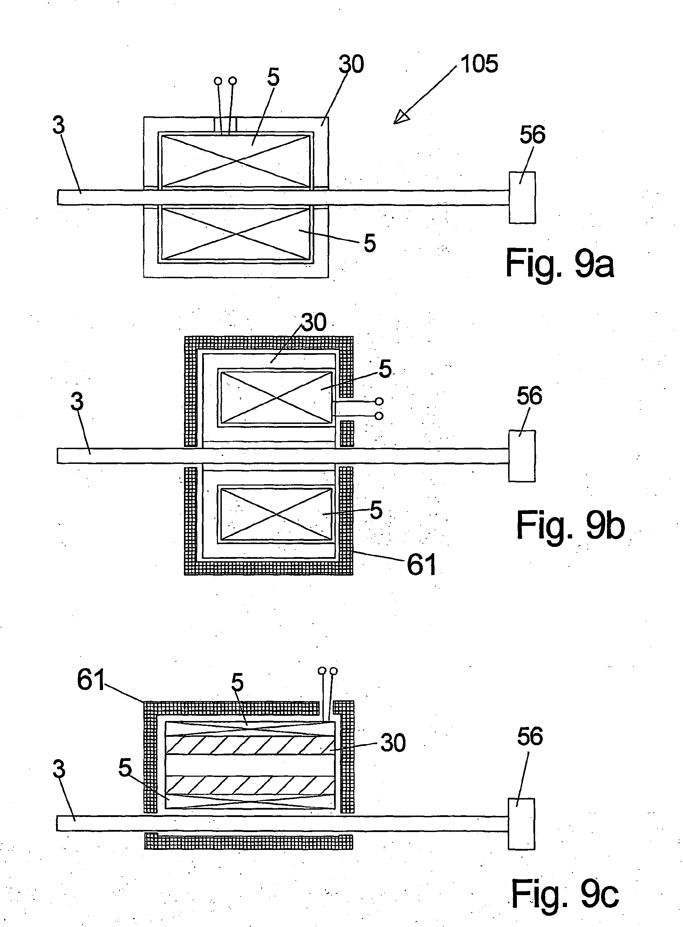

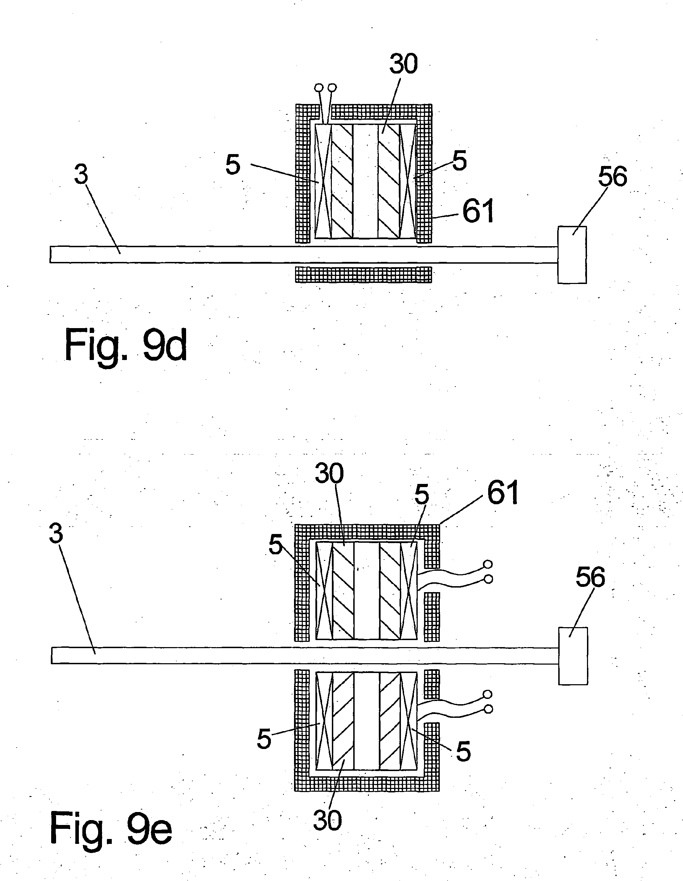

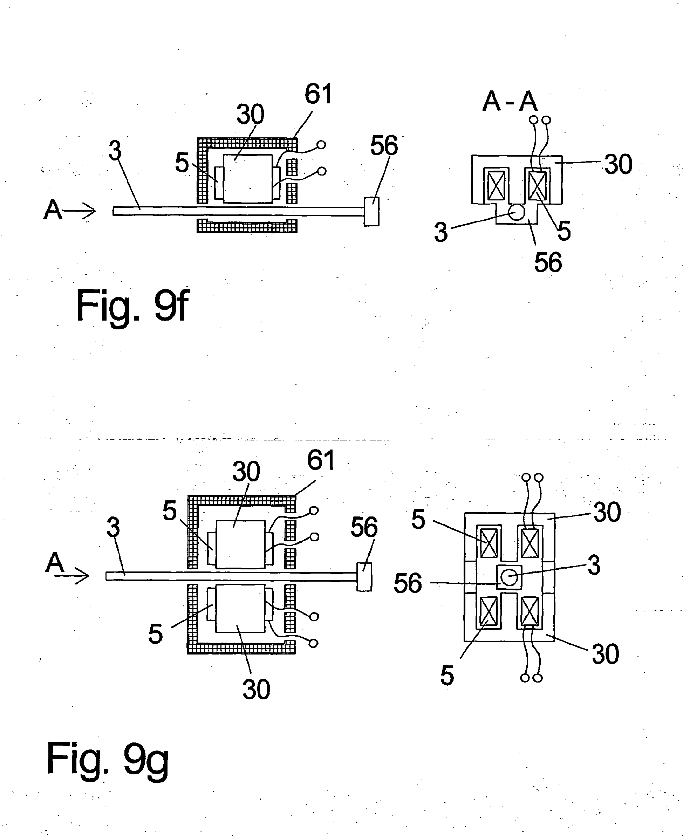

Die Figuren 9 zeigen Detektoranordnungen 105, die den Wellenleiter direkt abtasten, und nicht ein am Wellenleiter angeordnetes Villary-Bändchen.

Vorzugsweise wird bei diesen Lösungen der Fig. 9 sowohl auf eine Gleichstrom-Beaufschlagung der Detektorspule 5 verzichtet, als auch auf einen nah an der Detektorspule angeordneten Magneten als Biasmagnet.

Als Biasing wirkt die im Wellenleiter verbleibende Remanenz mit zirkularer Polarisation, welche durch den ursprünglichen Stromimpuls angeregt wurde.

Statt dessen wird die den Wellenleiter 3 entweder umschließende oder neben dem Wellenleiter 3 angeordnete Detektorspule 5 der Detektoranordnung 105 an einer solchen Position des Wellenleiters angeordnet, an die dem Wellenleiter entlanglaufende mechanische elastische Welle sich mit einer zurücklaufenden Welle, reflektiert an einem Reflektor 56 am Ende des Wellenleiters, sich so überlagern, daß die Amplitude verstärkt wird. Als Reflektor 56 wird zu diesem Zweck ein Block mit hohem spezifischem Gewicht, also vorzugsweise aus Metall, verwendet.

Die Figuren 9a und 9b zeigen dabei eine vom Wellenleiter durchdrungene Detektorspule 5, deren Durchgangsöffnung so groß ist, daß keine Berührung zwischen Detektorspule 5 und Wellenleiter 3 vorhanden ist. Die Detektorspule 5 wird wiederum von einem Flußleitkörper 30 mit dann etwa zylindrischem Außenumfang ummantelt, der stirnseitig ebenfalls Öffnungen zum Ein- und Austreten des Wellenleiters 3 besitzt, die den Wellenleiter 3 nicht berühren dürfen, sondern zu diesem einen ausreichenden Abstand aufweisen sollen.

In Fig. 9b ist die Detektorspule 5 dagegen von einem topfförmigen Flußleitkörper 30 eingefaßt, die die Detektorspule 5 dementsprechend auf einer Stirnseite nicht abdeckt. Dabei ist eine zusätzliche Ringwand des Flußleitkörpers 30 koaxial um den Wellenleiter 3 und von diesem beabstandet angeordnet zwischen Detektorspule 5 und Wellenleiter 3.

Fig. 9c - 9g betreffen eine oder mehrere den Wellenleiter 3 nicht umgebende, sondern neben diesem angeordnete Detektorspulen 5:

In Fig. 9c ist koaxial im inneren Hohlraum der Spule 5 ein z. B. buchsenförmiger Flußleitkörper 30 angeordnet. Für Fig. 9d gilt das gleiche, jedoch steht hier die Detektorspule 5 mit ihrer Längsachse lotrecht zur Meßrichtung 10, der Erstreckungsrichtung des Wellenleiters 3, im geringen Abstand hierzu, ohne diesen zu berühren. Gleiches gilt für den Flußleitkörper 30.

Fig. 9e zeigt eine gegenüber Fig. 9d gedoppelte Anordnung, also zwei einander bezüglich des Wellenleiters 3 diametral gegenüberliegende Detektorspulen 5 mit zugeordneten Flußleitkörpem 30.

In Fig. 9f ist - bei Ausrichtung der Spulenachse der Detektorspule 5 lotrecht zum Wellenleiter 3 - diese Detektorspule 5 auf einem E-förmigen Flußleitkörper 30, nämlich auf dessen mittleren, frei endenden Schenkel, angeordnet, so daß die äußeren frei endenden Schenkel möglichst nahe entlang des Außenumfanges der Detektorspule 5 verlaufen und der verbindende Querschenkel auf der vom Wellenleiter 3 abgewandten Seite der Detektorspule 5 angeordnet ist.

Fig. 9g zeigt wiederum eine demgegenüber verdoppelte Anordnung mit zwei solchen Einheiten aus Detektorspule 5 und Flußleitkörper 30, einander spiegelbildlich bezüglich des Wellenleiter 3 gegenüberliegend, wobei zusätzlich die Lücke zwischen den beiden freien Enden der einander gegenüberliegenden Schenkel der beiden Flußleitkörper 30 durch einen Verschlußkörper gefüllt sein kann, wobei der Verschlußkörper insbesondere ebenfalls ein Flußleitkörper 30 mit den zuvor definierten Materialeigenschaften sein kann.

Auch hier können wiederum, insbesondere bei den Lösungen gemäß der Figuren 9b - 9g, bei denen keine dichte Einhausung der Detektorspule durch die Flußleitstücke 30 gegeben ist, die Detektorspule einschließlich der Flußleitstücke, insbesondere die jeweils gesamte Detektoranordnung 105, von einer zusätzlichen Abschirmhülse 61, analog zur Darstellung und Beschreibung in der Fig. 5a, zur zusätzlichen magnetischen und elektrostatischen Abschirmung angeordnet sein.

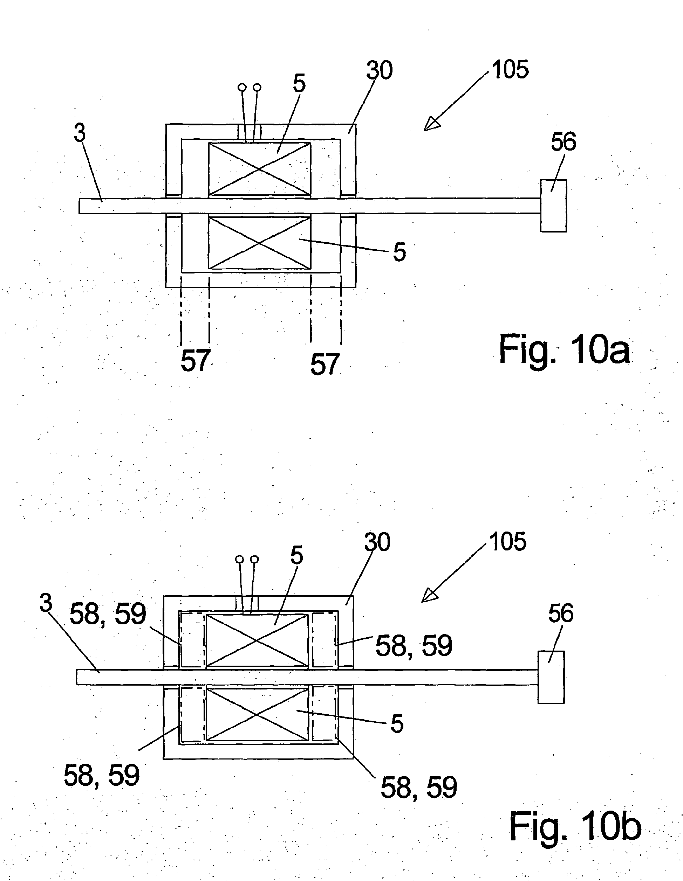

Die Figuren 10a, 10b zeigen weiterhin eine Lösung ähnlich der Figur 9a, jedoch mit dem Unterschied, daß zwischen der Detektorspule 5 und den umgebenden Flußleitstücken stirnseitig, also in axialer Richtung, im Fall der Fig. 10a ein Abstand 57 (Luftspalt) vorhanden ist, während im Fall der Fig. 10b zwischen den Stirnflächen der Detektorspule 5 und den inneren Stirnflächen der Flußleitstücke 30 ein, insbesondere den Wellenleiter 3 ringförmig umgebender, Remanenzkörper 58 vorhanden ist.

BEZUGSZEICHENLISTE

| | |
|---|---|
| 1 | Stützkörper |
| 2 | Kopfplatine |
| 3 | Wellenleiter |
| 4 | Villary-Bändchen |
| 4a, b | Teilbändchen |
| 105 | Detektoranordnung |
| 205 | Toroid-Spule |
| 5 | Detektorspule |
| 5' | Kompensationsspule |
| 5a | Öffnung |
| 6, 6', 6'', 6''' | Magnet |
| 7 | Verschlussklappe |
| 9 | Fortsatz |
| 10 | Messrichtung |
| 11 | Aussparung |
| 12 | Feldlinien |
| 13 | Dämpfungselement |
| 14 | Kleber |
| 15 | Lagerelement |
| 16 | Brückenergänzungsimpedanz |
| 17 | Verstärker |
| 20 | Schutzprofil |
| 21 | Schaumschlauch |
| 22 | Rückleiter |
| 23 | Entkopplungsspule |
| 24 | Feldspule |
| 25 | Koppelimpedanz |
| 26 | Entkopplungsimpedanz |
| 27 | Rückleiter |
| 28 | Positionsmagnet |
| 29 | Nutzsignal |
| 30, 130 | Flussleitkörper |
| 131 | Halbschale |
| 31 | Konstantstromdiode |
| 32 | Spannungsquelle |
| 132 | Deckel |
| 33 | Quadrierer |
| 133 | Basisteil |
| 37 | buchsenförmiges Lagerelement |
| 50 | Detektorschaltung |

| 51 | Stromquelle |
|----|----|
| 55 | Kompensationsmagnet |
| 56 | Reflektor |
| 57 | Abstand |
| 58 | Remanenzkörper |
| 59 | Permanentmagnet |
| 60 | Biasstrom |
| 61 | Abschirmgehäuse |

**Patentansprüche**

1. Positions-Sensor nach dem Laufzeitprinzip einer mechanisch-elastischen Welle mit

   - einem Wellenleiter (3),
   - einem Positionselement, z. B. einem Positionsmagneten (28), welches insbesondere entlang des Wellenleiters (3) bewegbar ist, sowie
   - einer am Wellenleiter (3) angeordneten Detektoranordnung (105), welche eine Detektor-Spule (5) umfasst,

   **dadurch gekennzeichnet, dass**

   - der Detektorspule (5) wenigstens ein Flussleitkörper (30) zugeordnet ist,
   - die Detektoranordnung (105) eine Stromquelle (51) umfasst, so dass ein Strom durch die Detektorspule (5) fließen kann und
   - die Stromquelle regelbar, vorzugsweise extern regelbar, ist.

2. Positions-Sensor nach Anspruch 1,
   **dadurch gekennzeichnet, dass**
   die Detektor-Spule (5) von einem Flussleitkörper (30) umgeben ist, so dass insbesondere ein geschlossener magnetischer Kreis durch die Spule (5) entsteht, zum Abschirmen gegen externe Magnetfelder.

3. Positions-Sensor nach Anspruch 1 oder 2,
   **dadurch gekennzeichnet, dass**

   - das Flussleitstück (30) aus einem ferromagnetischem Material mit einer Permeabilität von $\gg 1$ besteht und/ oder
   - das Flussleitstück (30) aus einer hochpermeablen Legierung, insbesondere aus Ferrit, besteht.

4. Positions-Sensor nach einem der vorhergehenden Ansprüche,
   **dadurch gekennzeichnet, dass**

   - der Wellenleiter (3) von Gleichstrom einer Gleichstromquelle (51) durchflossen ist und/oder
   - die Gleichstromquelle (51) eine regelbare konstante Stromquelle ist und die Strom-Regelbandbreite der Stromquelle (51) gleich oder größer, als das Doppelte der Signalfrequenz des Positionssignals ist.

5. Sensor nach einem der vorhergehenden Ansprüche, wobei die Detektoreinheit ein quer vom Wellenleiter (3) abstrebendes, mit dem Wellenleiter (3) mechanisch fest verbundenes, magnetoelastisches Element, insbesondere Villary-Bändchen (4) oder Wellenleiter (3) umfasst, welches sich durch wenigstens eine Öffnung (5a) in die Detektor-Spule (5) hinein erstreckt,
   **dadurch gekennzeichnet, dass**

   - der Flussleitkörper (30) die Detektor-Spule (5) bis auf die wenigstens eine Öffnung (5a) für das magnetoelastische Element, insbesondere Villary-Bändchen (4) und wenigstens eine Leiteröffnung (5b) für die die Detektor-Spule (5) versorgenden elektrischen Leiter die Detektor-Spule (5) vollständig umschließt und/oder
   - die Detektoranordnung (105) keinen Permanent-Magneten, insbesondere keinen Biasmagneten (6), umfasst.

6. Sensor nach einem der vorhergehenden Ansprüche,
   **dadurch gekennzeichnet, dass**

- die Detektoranordnung (105) direkt den Wellenleiter (3) detektiert und insbesondere am einen Ende des einen Wellenleiters (3), insbesondere dem der Detektoranordnung (105) nächstliegenden Ende, ein Reflektor (56) für die im Wellenleiter (3) laufende Welle angeordnet ist, insbesondere in Form eines Metallblockes, und
- die Detektoranordnung (105) in einer solchen Entfernung vom Reflektor (56) angeordnet ist, in der sich in Richtung Reflektor laufende Welle und von diesem reflektierte Welle in ihrer Amplitude verstärken, insbesondere verdoppeln.

7.  Sensor nach einem der vorhergehenden Ansprüche,
    **dadurch gekennzeichnet, dass**

- die Detektorspule (5) vom Wellenleiter (3) durchdrungen wird, und
- die Spule (5) in einem topfförmigen Flussleitkörper (30) angeordnet ist, der auf einer Stirnseite offen ist und insbesondere zusätzlich eine ringförmige Zwischenwand zwischen der Detektorspule (5) und dem Wellenleiter (3) umfasst oder
- die Detektorspule (5) neben dem Wellenleiter (3) mit ihrer Längsachse parallel oder quer zur Meßrichtung (10), der Verlaufsrichtung des Wellenleiters (3), angeordnet ist, und sich insbesondere auf dem Außenumfang eines buchsenförmigen Flussleitkörpers (30) oder im Inneren des buchsenförmigen Flussleitkörpers (30), jeweils mit übereinstimmender axialer Ausrichtung, angeordnet ist.

8.  Sensor nach einem der vorhergehenden Ansprüche,
    **dadurch gekennzeichnet, dass**

- bei querstehende Detektorspule zum Wellenleiter (3) zwei Detektorspulen (5) mit zugehörigen Flussleitkörpern (30) diametral einander gegenüberliegend bezüglich des Wellenleiters (3) angeordnet sind und/oder
- bei innerhalb des Flussleitkörpers angeordneter Detektorspule (5) der buchsenförmige Flussleitkörper (30) auf der vom Wellenleiter (3) abgewandten Seite stirnförmig geschlossen ist und insbesondere bei Betrachtung in Meßrichtung (10) das Flussleitstück eine E-Form mit dem mittleren Schenkel auf der Längsachse der Detektorspule (5) aufweist und den verbindenden Schenkel auf der vom Wellenleiter (3) abgewandten Seite.

9.  Sensor nach einem der vorhergehenden Ansprüche,
    **dadurch gekennzeichnet, dass**

- die Detektorschaltung (50) zusätzlich zur Detektor-Spule (5) eine Entkopplungsimpedanz (26) aufweist zur Entkopplung des Nutzsignals, wobei die Detektor-Spule (5) und eine Entkopplungsimpedanz (26) insbesondere in Reihe zueinander in den beiden Ästen einer insbesondere symmetrisch ausgebildeten Messbrücke der Detektorschaltung (50) verschaltet sind und/oder
- die Detektor-Spule (5) und die Entkopplungsimpedanz (26) in Reihe mit der Gleichstromquelle (51) verschaltet sind und/oder
- die Detektorschaltung (50) zusätzlich einen Differenzverstärker (17) zur Weiterverarbeitung des Positionsnutzsignals der Brückenschaltung bzw. Reihenschaltung, welche die Detektor-Spule (5) umfasst, aufweist, und insbesondere das Ausgangssignal des Differenzverstärkers einem Multiplizierer, insbesondere einem Quadrierer (33), zugeführt wird.

10. Sensor nach einem der vorhergehenden Ansprüche,
    **dadurch gekennzeichnet, dass**

- das magnetoelastische Element, insbesondere Villary-Bändchen (4) aus einem ersten Teilbändchen (4a) aus nicht-magnetischem und nichtmagnetoelastischen Material und einem damit verbundenen zweiten Teilbändchen (4b) aus magnetoelastischem Material besteht und/oder
- der Flussleitkörper (30) im Wesentlichen schalenförmig, genormt ist mit zwei einander in den Stirnseiten gegenüberliegenden Öffnungen (5a, 5a') für Ein- und Austritt des magnetoelastischen Elements und einer Leiteröffnung (5b) zum Durchtritt der elektrischen Leiter zur Detektor-Spule (5) hin, wobei sich die Leiteröffnung (5b) insbesondere in der zylindrischen Mantelfläche des Flussleitkörpers (30) befindet.

11. Sensor nach einem der vorhergehenden Ansprüche,
    **dadurch gekennzeichnet, dass**

- der zylindrische Flussleitkörper (30) aus einem topfförmigen Korpus mit einer offenen Stirnseite und einem auf diese stirnseitiger Öffnung passenden Deckel besteht oder aus zwei halbzylindrischen Schalen besteht und/oder
- die Detektor-Spule (5) eine Toroid-Spule (205) ist.

**12.** Sensor nach einem der vorhergehenden Ansprüche,
**dadurch gekennzeichnet, dass**

- die Detektoranordnung (105), insbesondere wenigstens die Detektorspule (5), von einer Abschirmhülse (61) gegen magnetische und elektrostatische Fremdeinflüsse, insbesondere zusätzlich zu dem wenigstens einen Flussleitstück (30), dicht umgeben ist, die aus einem Mu-Metall mit einer Permeabilität von >> 1 besteht, insbesondere >> 1000 und
- auf der Außenseite der Abschirmhülse (61) oder eines entsprechend geformten Flussleitstücks (30) wenigstens ein Magnet (6' - 6''') angeordnet ist und insbesondere die Magnete (6' - 6''') radial polarisiert sind.

**13.** Sensor nach einem der vorhergehenden Ansprüche,
**dadurch gekennzeichnet, dass**
ein Magnet auf der Stirnseite der zylindrischen Außenfläche hinweisend auf die Öffnung für das magnetoelastische Element und/oder wenigstens ein Magnet auf der Mantelfläche, insbesondere nahe des Austrittsendes des magnetoelastischen Elements, angeordnet ist.

**14.** Sensor nach einem der vorhergehenden Ansprüche, wobei die Detektoreinheit ein quer vom Wellenleiter (3) abstrebendes, mit dem Wellenleiter (3) mechanisch fest verbundenes, magnetoelastisches Element, insbesondere Villary-Bändchen (4) oder Wellenleiter (3) umfasst, welches sich durch wenigstens eine Öffnung (5a) in die Detektor-Spule (5) hinein erstreckt,
**dadurch gekennzeichnet, dass**
die Abschirmhülse (61) die Detektor-Spule (5) bis auf die wenigstens eine Öffnung (5a) für das magnetoelastische Element, insbesondere Villary-Bändchen (4) und wenigstens eine Leiteröffnung (5b) für die die Detektor-Spule (5) versorgenden elektrischen Leiter die Detektor-Spule (5) vollständig umschließt.

**15.** Positions-Sensor nach Anspruch 1, wobei das Positionselement insbesondere nahe am Wellenleiter bewegbar ist,
**dadurch gekennzeichnet, dass**
wenigstens ein Kompensationsmagnet (55) dem Wellenleiter (3) in der Nähe der Detektoranordnung (105) zugeordnet ist.

**16.** Positions-Sensor nach Anspruch 1,
**dadurch gekennzeichnet, dass**

- der Kompensationsmagnet (55) zwischen dem Messbereich des Wellenleiters (3) und der Detektoranordnung (105) positioniert ist und/oder
- der Kompensationsmagnet (55) mit einer Flussrichtung parallel zur Erstreckungsrichtung des Wellenleiters (3) angeordnet ist und insbesondere der Kompensationsmagnet (55) ein Permanentmagnet ist.

**17.** Positions-Sensor nach einem der vorhergehenden Ansprüche, wobei die Detektorspule eine Toroid-Spule (205) ist,
**dadurch gekennzeichnet, dass**

- die axiale Länge der Toroid-Spule (205) mindestens dem Durchmessers ihres -freien zentralen Durchganges (5a) entspricht, vorzugsweise mindestens doppelt so groß ist und/oder
- die Toroid-Spule (205) von einem Flussleitkörper (130) umgeben ist, der eine etwa zylindrische Form besitzt und vorzugsweise aus zwei Halbschalen (131) besteht, die auf jeweils einer Stirnseite geschlossen sind bis auf eine zentrale Durchgangsöffnung (5a) analog zur Durchgangsöffnung der Toroid-Spule (205), und deren Kontaktebene quer zur Längsachse der Toroid-Spule (205) und des Flussleitkörpers (130) verläuft.

**18.** Verfahren zur Positionsbestimmung eines Positionselementes, z. B. eines Positionsmagneten (28), relativ zu dem Wellenleiter (3) eines Positions-Sensors nach einem der vorhergehenden Ansprüche,
**dadurch gekennzeichnet, dass**
zur Verstärkung des Positionsnutzsignals (29) die Detektor-Spule (5) einer Vormagnetisierung, durch Strombeaufschlagung, unterworfen wird.

**19.** Verfahren nach Anspruch 18,
**dadurch gekennzeichnet, dass**

- die Vormagnetisierung so gesteuert wird, dass das Positionsnutzsignal (29), insbesondere hinsichtlich seiner Amplitude und/oder in seiner Relation zu einem Positionsstörsignal, optimiert wird und/oder
- die Vormagnetisierung so eingestellt wird, dass das von der Detektor-Spule (5) der Detektoranordnung (105) umgebene magnetoelastische Element, insbesondere Villary-Bändchen (4) im linearen Bereich betrieben wird, in welchem die Änderung der magnetischen Permeabilität weitgehend linear mit der Änderung der mechanischen Zug- oder Druckspannung linear korreliert sind und/oder
- die Detektor-Spule (5) erst mit Vormagnetisierung beaufschlagt wird, nachdem der Erregerpuls durch den Wellenleiter (3) abgeklungen ist.

**20.** Verfahren nach einem der vorhergehenden Verfahrensansprüche,
**dadurch gekennzeichnet, dass**

- die Resonanzfrequenz der Detektorspule (5) durch Impedanzanpassung auf die Frequenz des Nutzsignales eingestellt ist, insbesondere durch Verwendung von Kapazitäten und/oder Widerständen und/oder
- der Wellenleiter ständig von Gleichstrom durchströmt ist und der Erregerstromimpuls diesem Gleichstrom, mit demgegenüber erhöhter Stromstärke oder Spannung, überlagert wird.

**Claims**

**1.** A position sensor according to a run time principle of a mechanical-elastic wave with

- a wave conductor (3);
- a position element, e.g. a position magnet (28), which can be moved in particular along the wave conductor (3); and
- a detector assembly (105) disposed at the wave conductor (3), which detector assembly comprises a detector coil (5), wherein
- at least one flow conducting body (30) is associated with the detector coil (5);
- the detector assembly (105) comprises a power source (51), so that a current can flow through the detector coil (5); and
- the power supply is controllable, preferably externally controllable.

**2.** A position sensor according to claim 1, wherein the detector coil (5) is surrounded by a flow conducting body (30), so that in particular a closed magnetic loop through the coil (5) is created for shielding against external magnetic fields.

**3.** A position sensor according to claim 1 or 2, wherein

- the flow conductor body (30) is comprised of a ferromagnetic material with a permeability of >> 1; and/or
- the flow conductor body (30) is comprised of a highly permeable alloy, in particular ferrite.

**4.** A position sensor according to one of the preceding claims, wherein

- the wave conductor (3) is flowed by DC current from a DC power supply (51); and/or
- the DC power supply (51) is a controllable constant power supply and the current control band width of the power supply (51) is equal to or greater than twice the signal frequency of the position signal.

**5.** A sensor according to one of the preceding claims, wherein the detector unit comprises a magneto elastic element, in particular a Villary band (4) or a wave conductor (3), which extends transversally from the wave conductor (3), which is permanently mechanically connected with the wave conductor (3), and which extends at least through one opening (5a) into the detector coil (5), wherein

- the flow conductor body (30) completely encloses the detector coil (5) besides the at least one opening (5a) for the magneto elastic element, in particular the Villary band (4) and besides at least one conductor opening (5b) for the electrical conductors supplying the conductor coil (5), and
- the detector assembly (105) does not comprise a permanent magnet, in particular no bias magnet (6).

**6.** A sensor according to one of the preceding claims, wherein

- the detector assembly (105) directly detects the wave conductor (3), and a reflector (56) for the wave running in the wave conductor (3), in particular provided as a metal block, is disposed in particular at one end of the one wave conductor (3), in particular at the end most proximal to the detector assembly (105), and
- the detector assembly (105) is disposed at a distance from the reflector (56), so that a wave running towards the reflector and a wave reflected by said reflector are reinforced with respect to their amplitude, in particular doubled.

**7.** A sensor according to one of the preceding claims, wherein

- the detector coil (5) is permeated by the wave conductor (3); and
- the coil (5) is disposed in a pot shaped flow conductor body (30), which is open at one face, and which in particular additionally comprises an annular intermediary wall between the detector coil (5) and the wave conductor (3), or
- the detector coil (5) is disposed besides the wave conductor (3) with its longitudinal axis parallel or transversal to the measuring direction (10), the extension of the wave conductor (3), and disposed in particular on the outer circumference of a sleeve shaped flow conductor body (30), or in the interior of the sleeve shaped flow conductor body (30), respectively with coinciding axial orientation.

**8.** A sensor according to one of the preceding claims, wherein

- two detector coils (5) with associated flow control bodies (30) are disposed diametrically opposed to one another with respect to the wave conductor (3), when the detector coil is disposed transversal to the wave conductor (3), and/or
- the sleeve shaped flow conductor body (30) comprises a closed face on the side facing away from the wave conductor (3), when the detector coil (5) is disposed within the flow conductor body, and in particular, when viewed in measurement direction (10), the flow conductor body (3) comprises E-shape with the center arm on the longitudinal axis (5) of the detector coil, and with the connecting arm on the side facing away from the wave conductor (3).

**9.** A sensor according to one of the preceding claims, wherein

- the detector circuit (50) comprises a decoupling impedance (26) in addition to the detector coil (5) for decoupling the wanted signal, wherein the detector coil (5) and a decoupling impedance (26) are connected in particular in series with one another in both branches of a particularly symmetrically configured measuring bridge of the detector circuit (50), and/or
- the detector coil (5) and the decoupling impedance (26) are connected in series with the DC power supply (51), and/or
- the detector circuit (50) additionally comprises a differential amplifier (17) for further processing of the wanted position signal of the bridge circuit or of the series circuit, which comprises the detector coil (5), and in particular the output signal of the differential amplifier is fed to a multiplier, in particular to a squaring device (33).

**10.** A sensor according to one of the preceding claims, wherein

- the magneto elastic element, in particular the Villary band (4) is comprised of a first partial band (4a) made of non-magnetic and non-magneto elastic material, and a second partial band (4b) connected therewith made of magneto elastic material; and/or
- the flow conductor body (30) is configured substantially dish shaped with two openings (5a, 5a') opposed to one another in the faces for entry and exit of the magneto elastic element, and with a conductor opening (5b) for passing the electric conductors through to the detector coil (5), wherein the conductor opening (5b) is disposed in particular in the cylindrical enveloping surface of the flow conductor body (30).

**11.** A sensor according to one of the preceding claims, wherein

- the cylindrical flow conductor body (30) is comprised of a pot shaped body with an open face and with a lid fitting on said face opening, or comprised of two semi-cylindrical shells, and/or
- the detector coil is a toroid coil (205).

**12.** A sensor according to one of the preceding claims, wherein

- the detector assembly (105), in particular at least the detector coil (5), is surrounded tight by a shielding sleeve (61) against magnetic- and electrostatic interference, in particular in addition to the at least one flow conductor body (30), which sleeve is made of a Mu-metal with a permeability >> 1, in particular >> 1000, and
- at least one magnet (6', 6''') is disposed on the outside of the shielding sleeve (61) or of a flow conductor body (30), which is formed accordingly, and the magnets (6', 6''') are in particular radially polarized.

**13.** A sensor according to one of the preceding claims, wherein a magnet is disposed on the face of the cylindrical outer surface facing towards the opening for the magneto elastic element, and/or at least one magnet is disposed on the enveloping surface, in particular proximal to the outlet end of the magneto elastic element.

**14.** A sensor according to one of the preceding claims, wherein the detector unit comprises a magneto elastic element transversally protruding from the wave conductor (3) and permanently mechanically connected to the wave conductor (3), in particular a Villary band (4) or a wave conductor (3), which extends through at least one opening (5a) into the detector coil (5), wherein the shielding sleeve (61) completely encloses the detector coil (5) besides the at least one opening (5a), for the magneto elastic element, in particular the Villary band (4), and besides at least one conductor opening (5b) for the electrical conductor supplying the detector coil (5).

**15.** A position sensor according to claim 1, where the position element is movable in particular close to the wave conductor, wherein at least one compensation magnet (55) is associated with the wave conductor (3) proximal to the detector assembly (105).

**16.** A position sensor according to claim 1, wherein

- the compensation magnet (55) is positioned between the measuring range of the wave conductor (3) and the detector assembly (105), and/or
- the compensation magnet (55) is disposed with a flow direction parallel to the orientation of the wave conductor (3), and in particular, where the compensation magnet (55) is a permanent magnet.

**17.** A position sensor according to one of the preceding claims, where the detector coil is a toroid coil (205), wherein

- the axial length of the toroid coil (205) corresponds at least to the diameter of its free central pass-through opening (5a), preferably it is at least twice the size, and/or
- the toroid coil (205) is surrounded by a flow conductor body (130), which has approximately cylindrical shape and which is preferably comprised of two half shells (131), which are closed on one respective face besides a central pass-through opening (5a), analogous to the pass-through opening of the toroid coil (205), and whose contact plane extends transversally to the longitudinal axis of the toroid coil (205) and of the flow conductor body (130).

**18.** A method for determining the position of a position element, e.g. of a position magnet (28), relative to the wave conductor (3) of a position sensor according to one of the preceding claims, wherein the detector coil (5) is subjected to an advance magnetization through current loading in order to amplify the wanted position signal (29).

**19.** A method according to claim 18, wherein

- the pre-magnetization is controlled, so that the wanted position signal (29) is optimized in particular with respect to its amplitude, and/or relative to a position interference signal; and/or
- the bias-magnetization is adjusted, so that the magneto elastic element enveloped by the detector coil (5) of the detector assembly (105), in particular the Villary band (4), is operated in the linear range, in which the change of the magnetic permeability is mostly correlated linear with the change of the mechanical tension- and compression force, and/or
- the detector coil (5) is only bias-magnetized after the excitation impulse through the wave conductor (3) has subsided.

**20.** A method according to one of the preceding method claims, wherein

- the resonance frequency of the detector coil (5) is adjusted by impedance adaptation to the frequency of the wanted signal, in particular by using capacitors and/or resistors, and/or
- the wave conductor is permanently flowed through by DC current and the excitation current impulse is superimposed to said DC current with respectively increased current or voltage.

**Revendications**

1. Capteur de position selon le principe du temps de fonctionnement d'un arbre mécaniquement élastique avec

   - un guide d'ondes (3),
   - un élément de position, par exemple un aimant de position (28) qui est mobile en particulier le long du guide d'ondes (3), ainsi
   - qu'un dispositif détecteur (105) disposé sur le guide d'ondes (3) qui comprend une bobine détectrice (5),

   **caractérisé en ce que**

   - la bobine détectrice (5) est associée au moins à un corps de guide de flux (30)
   - **en ce que** le dispositif détecteur (105) comprend une source de courant (51) de sorte qu'un courant peut traverser la bobine détectrice (5) et
   - **en ce que** la source de courant est réglable de préférence réglable de l'extérieur.

2. Capteur de position selon la revendication 1,
   **caractérisé en ce que**
   La bobine détectrice (5) est entourée d'un corps de guide de flux (30) de sorte qu'il est généré en particulier un cercle magnétique fermé traversant la bobine (5), en protection contre des champs magnétiques externes.

3. Capteur de position selon la revendication 1 ou 2, **caractérisé en ce que**

   - la pièce de guide de flux (30) se compose d'un matériau ferromagnétique ayant une perméabilité de >> 1 et/ou
   - la pièce de guide de flux (30) se compose d'un alliage hautement perméable en particulier en ferrite.

4. Capteur de position selon l'une des revendications précédentes, **caractérisé en ce que**

   - le guide d'ondes (3) est traversé par du courant continu d'une source de courant continu (51) et/ou
   - la source de courant continu (51) est une source de courant constante réglable et la plage de réglage de courant de la source de courant (51) est égale ou supérieure au double de la fréquence du signal de position.

5. Capteur selon l'une des revendications précédentes, l'unité détectrice comprenant un élément magnéto-élastique faisant transversalement saillie du guide d'ondes (3) et relié fixement au guide d'ondes (3) de manière mécanique, en particulier une bandelette Villary (4) ou un guide d'ondes (3) qui pénètre dans la bobine détectrice (5) par au moins une ouverture (5a),
   **caractérisé en ce que**

   - le corps de guide de flux (30) entoure complètement la bobine détectrice (5) à l'exception d'au moins une ouverture (5a) pour l'élément magnéto-élastique en particulier une bandelette Villary (4) et au moins à l'exception d'une ouverture de guide (5b) pour le guide électrique alimentant la bobine détectrice (5) et/ou
   - le dispositif détecteur (105) ne comprend aucun aimant permanent en particulier aucun aimant de polarisation (6).

6. Capteur selon l'une des revendications précédentes,
   **caractérisé en ce que**

   - le dispositif détecteur (105) détecte directement le guide d'ondes (3), et en particulier il est disposé à une extrémité d'un guide d'ondes (3) en particulier à l'extrémité la plus proche du dispositif détecteur (105) un réflecteur (56) en particulier sous forme d'un bloc métallique pour l'onde passant dans le guide d'ondes (3) et le dispositif détecteur (105) est disposé à une distance telle du réflecteur (56) que l'amplitude de l'onde allant en direction du réflecteur et de l'onde réfléchie par ce dernier est amplifiée en particulier doublée.

**7.** Capteur selon l'une des revendications précédentes, **caractérisé en ce que**

- la bobine détectrice (5) est traversée par le guide d'ondes (3) et
- la bobine (5) est disposée dans un corps de guide de flux (30) en forme de pot qui est ouvert sur une face frontale et en particulier comprend une paroi intermédiaire annulaire entre la bobine détectrice (5) et le guide d'ondes (3) ou
- la bobine détectrice (5) est disposée à côté du guide d'ondes (3) avec son axe longitudinal parallèlement ou transversalement à la direction de mesure (10), la direction de défilement du guide d'onde (3) et est disposé en particulier sur la périphérie externe d'un corps de guide de flux en forme de douille (30) ou à l'intérieur du corps de guide de flux (30) respectivement avec une direction axiale coïncidente.

**8.** Capteur selon l'une des revendications, **caractérisé en ce que**

- pour une bobine de détection transversale au guide d'ondes (3) sont disposées deux bobines détectrices (5) avec des corps de guide de flux associés (30) diamétralement opposés par rapport au guide d'ondes (3) et/ou
- pour la bobine détectrice (5) disposée à l'intérieur du corps de guide de flux, le corps de guide d'ondes (30) en forme de douille est formé frontalement sur la face détournée du guide d'ondes (3) et en particulier en observant dans le sens de mesure (10), la pièce de guide de flux présente la forme d'un E avec la barre du milieu sur la face longitudinale de la bobine détectrice (5) et la barre de connexion sur la face détournée du guide d'ondes (3).

**9.** Capteur selon l'une des revendications précédentes, **caractérisé en ce que**

- le circuit de détecteur (50) présente en plus de la bobine de détection (5) une impédance de découplage (26) pour le découplage du signal utile, la bobine détectrice (5) et une impédance de découplage (26) étant montées en série entre elles en particulier dans les deux branches d'un pont de mesure réalisé particulièrement symétrique du circuit de détecteur (50) et/ou étant montées en série avec la source de courant continu (51) et/ou
- le circuit de détecteur (50) présente en supplément un amplificateur différentiel (17) du signal utile de position du circuit en pont respectivement du circuit en série, qui comprend la bobine détectrice (5) et en particulier le signal de sortie de l'amplificateur différentielle est amené à un multiplicateur, en particulier à un quadrupleur (33).

**10.** Capteur selon l'une des revendications précédentes, **caractérisé en ce que**

- l'élément magnéto-élastique, en particulier la bandelette Villary (4) se compose d'une première bandelette partielle (4a) en matériau non magnétique et non magnéto-élastique et d'une seconde bandelette partielle (4b) reliée à la première et/ou
- le corps de guide de flux (30) est essentiellement en forme de coque avec deux ouverture (5a, 5a') opposées sur la face frontale pour l'entrée et la sortie de l'élément magnétique et une ouverture (5b) pour la traversée du conducteur électrique en direction de la bobine de détecteur (5), l'ouverture de conducteur (5b) se trouvant en particulier dans le corps de guide de flux (30).

**11.** Capteur selon l'une des revendications précédentes, **caractérisé en ce que**

- le corps cylindrique de guide de flux (30) se compose d'un corps en forme de pot avec une face frontale ouverte et un couvercle adapté à cette ouverture en face frontale ou de deux coques hémisphériques et/ou
- la bobine détectrice (5) est une bobine toroïdale (205).

**12.** Capteur selon l'une des revendications précédentes, **caractérisé en ce que**

- le corps cylindrique de guide de flux (105) en particulier au moins la bobine détectrice (5) est entouré d'une gaine (61) formant écran contre des influences externes magnétiques et électrostatiques, en particulier en supplément d'au moins une pièce de guide de flux (30), gaine qui se compose d'un métal Mu d'une perméabilité de >> 1, en particulier >> 1000 et
- sur la face externe de la gaine écran (61) ou d'une pièce de guide de flux (30) formé en conséquence, il est disposé au moins un aimant (6' - 6''') et en particulier les aimants (6' - 6''') sont polarisés radialement.

**13.** Capteur selon l'une des revendications précédentes, **caractérisé en ce qu'**un aimant est disposé sur la face frontale de la surface externe cylindrique en direction de l'ouverture prévue pour l'élément magnéto-élastique et/ou un aimant est disposé sur la surface d'enveloppe en particulier à proximité de l'extrémité de sortie de l'élément magnéto-élastique.

14. Capteur selon l'une des revendications précédentes, l'unité de détecteur comprenant un élément magnéto-élastique relié fixement au guide d'ondes (3) de manière mécanique et faisant saillie transversalement du guide d'ondes (3), en particulier une bandelette Villary (4) ou un guide d'ondes (3) qui s'engage dans la bobine détectrice (5) par au moins une ouverture (5a),
**caractérisé en ce que** la gaine (61) formant écran entoure complètement la bobine détectrice (5) à l'exception d'une ouverture (5a) pour l'élément magnéto-élastique (5b), en particulier la bandelette Villary (4) et au moins à l'exception d'une ouverture de conducteur (5b) pour les conducteurs électriques alimentant la bobine électrique (5).

15. Capteur de position selon la revendication 1, l'élément de position étant mobile en particulier à proximité sur le guide d'ondes, **caractérisé en ce qu'**au moins un aimant de compensation (55) est associé au guide d'ondes (3) à proximité du dispositif détecteur (105).

16. Capteur de position selon la revendication 1, **caractérisé en ce que**

   - l'aimant de compensation (55) est positionné entre la plage de mesure du guide d'ondes (3) et du dispositif détecteur (105) et/ou
   - l'aimant de compensation (55) est disposé avec une direction de flux parallèlement à la direction d'extension du guide d'onde (3) et en particulier l'aimant de compensation (55) est un aimant permanent.

17. Capteur de position selon l'une des revendications précédentes, la bobine détectrice étant une bobine toroïdale (205), **caractérisé en ce que**

   - la longueur axiale de la bobine toroïdale (205) correspond au moins au diamètre de son passage central libre (5a), de préférence deux fois sa dimension et/ou,
   - la bobine toroïdale (205) est entourée par un corps de guide de flux (130) qui possède une forme cylindrique et de préférence se compose de deux demi-coques (131) qui sont fermées respectivement sur une face frontale excepté sur une ouverture de passage centrale (5a) analogue à l'ouverture de passage de la bobine toroïdale (205) et dont le plan de contact s'étend transversalement à l'axe longitudinal de la bobine toroïdale (205) et du corps de guide de flux (130).

18. Procédé pour la détermination de position d'un élément de position par exemple un aimant de position (28) par rapport au guide d'ondes (3) d'un capteur de position selon l'une des revendications précédentes, **caractérisé en ce que** pour l'augmentation du signal utile de position (29) la bobine détectrice (5) est soumise à une prémagnétisation par impact de courant.

19. Procédé selon la revendication 18, **caractérisé en ce que**

   - la prémagnétisation est commandée de sorte que le signal utile de position (29) est optimisé en particulier par rapport à son amplitude et/ou dans sa relation avec un signal perturbateur de position et/ou
   - la prémagnétisation est réglée de sorte que l'élément magnéto-élastique entouré par la bobine détectrice (5) du dispositif détecteur (105), en particulier une bandelette Villary (4), est entraîné dans la zone linéaire, dans laquelle la modification de la perméabilité magnétique est corrélée linéairement en grande partie avec la modification de la tension mécanique de traction ou de poussée et/ou
   - la bobine détectrice (5) subit tout d'abord une prémagnétisation après que l'impulsion d'excitation soit diminuée par le guide d'ondes (3).

20. Procédé selon l'une des revendications précédentes de procédé, **caractérisé en ce que**

   - la fréquence de résonance de la bobine détectrice (5) est réglée sur la fréquence du signal utile par adaptation d'impédance, en particulier par l'utilisation de capacités et/ou de résistances et/ou
   - le guide d'ondes est traversé en permanence par un courant continu et l'impulsion de courant d'excitation se superpose à ce courant continu avec une intensité de courant ou une tension accrue.

10

7    11    5    4    3    8

9    27    **Fig. 1**

3

7    13

5

4

**Fig. 2a**

6    3
9        1
22        21

5

5a

4    **Fig. 3**

Fig. 4a

Fig. 4b

Fig. 4c

Fig. 4d

Fig. 5a

Fig. 5b1

Fig. 5b2

Fig. 5c

Fig. 6

Fig. 7a

Fig. 7b

25

5a

205

Fig. 8a

60

205

131

**Fig. 8b**

60

105

3

130

5a

131

**Fig. 8c**

Fig. 9a

Fig. 9b

Fig. 9c

Fig. 9d

Fig. 9e

**Fig. 9f**

**Fig. 9g**

Fig. 10a

Fig. 10b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5590091 A
- US 5736855 A
- US 2511178 A
- DE 2833369
- WO 6935923 A